# EUROPEAN PATENT APPLICATION

(11) **EP 1 712 265 A1**
(43) Date of publication of application: **18.10.2006**
(21) Application number: 04807549.3
(22) Date of filing: 22.12.2004
(51) Int. Cl.: B01D 35/30, F02M 37/22

(54) **FILTER DEVICE**

(30) Priority: 09.01.2004 JP 2004004014; 18.06.2004 JP 2004181043; 18.06.2004 JP 2004181081
(71) Applicant: AISAN KOGYO KABUSHIKI KAISHA, Obu-shi, Aichi 474-8588 (JP)
(72) Inventor: SUZUKI, Nobuo c/o Aisan Kogyo Kabushiki Kaisha, Obu-shi, Aichi 4748588 (JP); TAKAGI, Kunio c/o Aisan Kogyo Kabushiki Kaisha, Obu-shi, Aichi 4748588 (JP); OKU, Toshihide c/o Aisan Kogyo Kabushiki Kaisha, Obu-shi, Aichi 4748588 (JP); OZEKI, Masashi c/o Aisan Kogyo Kabushiki Kaisha, Obu-shi, Aichi 4748588 (JP); SUGIURA, Hirokazu c/o Aisan Kogyo Kabushiki Kaisha, Obu-shi, Aichi 4748588 (JP); KUDO, Takeshi c/o Aisan Kogyo Kabushiki Kaisha, Obu-shi, Aichi 4748588 (JP)
(74) Representative: Feldmeier, Jürgen
(86) International application number: PCT/JP2004/019192
(87) International publication number: WO 2005/065802

(57) **Abstract**

The present invention has an object to provide a filter device in which a filter is directly fixed to a container, thus eliminating the use of a filter frame. A fuel filter 6 of a fuel supply system 60 includes a filter element 22 for filtering fuel and a filter case 21 made of resin which houses the filter element 22. Ends 22b and 22c of the filter element 22 are directly fixed to an inner wall surface of the filter case 21 by welding. Further, the filter case 21 is formed, on the inner wall surface, with a groove 34 at each end of a weld part 36 in a longitudinal (vertical) direction. The groove 34 serves to receive a melted resin squeezed out from the weld part 36. To isolate the weld part 36 from a (filtering) body 22a of the filter element 22, protrusive ribs 32 and 33 are provided on the inner wall surface of the filter case 21.

## Description

### TECHNICAL FIELD

The present invention relates to a filter device including a filter element housed in a container and, more particularly, to a filter device smaller in number of parts or components.

### BACKGROUND ART

Heretofore, in a filter device including a filter element housed in a container, the filter element is fixed to the container with a filter frame which holds the filter element. One of such filter devices may be for example a fuel filter disclosed in Japanese unexamined patent publication No. 11-82210. This publication discloses a technique of fixing a filter element (a filtering element) to a filter frame (a plate) with adhesive and a technique of joining a filter element (a filtering member) to a filter frame (a plate) by vibration welding. Further, it is also disclosed to hold a filter element (a filtering element) to a filter frame (a plate) by crimping.

[Patent Document 1] Japanese unexamined patent publication No. 11-82210.

### DISCLOSURE OF INVENTION

### PROBLEMS TO BE SOLVED BY THE INVENTION

In the above mentioned techniques, however, the filter element is fixed to the container through the filter frame. Specifically, the filter element is fixed to the filter frame by adhesive, vibration welding, or crimping and then the filter frame holding the filter element is fixed to the container. In this manner, the above mentioned conventional techniques would need the filter frame for fixation to the container and the number of parts or components are larger by just that much. This would accordingly be disadvantageous in manufacturing costs. Using the filter frame would need an additional assembling process thereof, which leads to a decrease in working efficiency.

The present invention has been made to solve the above problems and has a purpose to provide a filter device in which a filter is directly fixed to a container, thereby eliminating the use of a filter frame.

### MEANS FOR SOLVING THE PROBLEMS

To solve the above purpose, the present invention provides a filter device for filtering out impurities, comprising: a filter element made of resin, for filtering out the impurities; and a container made of resin, which houses the filter element, wherein the filter element is joined to the container.

It should be understood that The term "filtering" in the description includes not only a solid-liquid separating operation but also a filter dust collection operation for removing fine particles from gas.

In this filter device, the filter element itself is joined to the container and housed therein. Specifically, the container is arranged to have a function of holding the filter element. This makes it possible to eliminate the use of a filter frame and improve manufacturing costs and working efficiency.

In the filter device according to the present invention, preferably, the filter element is joined to the container by resin welding.
This is because the filter element can easily be joined to the container by resin welding.

Further, in the filter device according to the present invention, preferably, the welding is hot plate welding.
This is because the filter element can easily be joined to the container by hot plate resin welding of resin.

Further, in the filter device according to the present invention, preferably, the filter element has an end directly fixed by welding to an inner wall surface of the container.

In this filter device, the end of the filter element is directly fixed to a melted portion of the inner wall surface of the container. Specifically, there is no need to fix the filter element to the container through a conventionally used filter frame. The use of such filter frame can be eliminated accordingly. Thus, the filter device is advantageous in manufacturing costs and working efficiency.

In the filter device according to the present invention, preferably, the filter element is fixed in a folded state having a plurality of pleats.
This configuration provides an increased filtering area of the filter element, resulting in improved filtering performance.

Further, in the filter device according to the present invention, preferably, the filter element is fixed to the container of which the resin forming the inner wall surface having been melted, permeating into the filter element, and solidified therein.
When a melted resin permeates into the filter element and is solidified as above, the filter element can firmly be fixed to the container.

Further, in the filter device according to the present invention, preferably, a weld part of the filter element and the inner wall surface is formed in a narrow strip shape.
Accordingly, the filter element can be fixed more firmly to the container.

Further, the filter device according to the present invention, preferably, the inner wall surface of the container is provided with a groove formed in each end of the weld part in a longitudinal direction so that the melted resin squeezed out from the welded part is received in the groove.

If excess melted resin is squeezed out, it will be solidified as flash or burr. When a product is finished with the flash remaining unremoved, the performance of such finished filter device is low. To be concrete, for example, the flash may drop and partially come to be mixed in a filtered fluid. Further, there is a possibility that the melted resin sticks to and remains on a melting device for melting the inner wall surface of the container. In this case, the surface of the melting device has to be cleaned, which will decrease production efficiency.

In the filter device of the present invention, however, excess melted resin is received in the groove and solidified therein. Such solidified resin remains sticking to the groove. This makes it possible to reliably prevent part of the excess solidified resin from coming to be mixed in the filtered fluid.
It is further possible to prevent the resin from sticking to the melting device and therefore maintain production efficiency.

Further, the filter device according to the present invention, preferably, comprises a protrusive rib formed on the inner wall surface of the container to isolate the welded part of the filter element and the inner wall surface from a filtering part of the filter element.

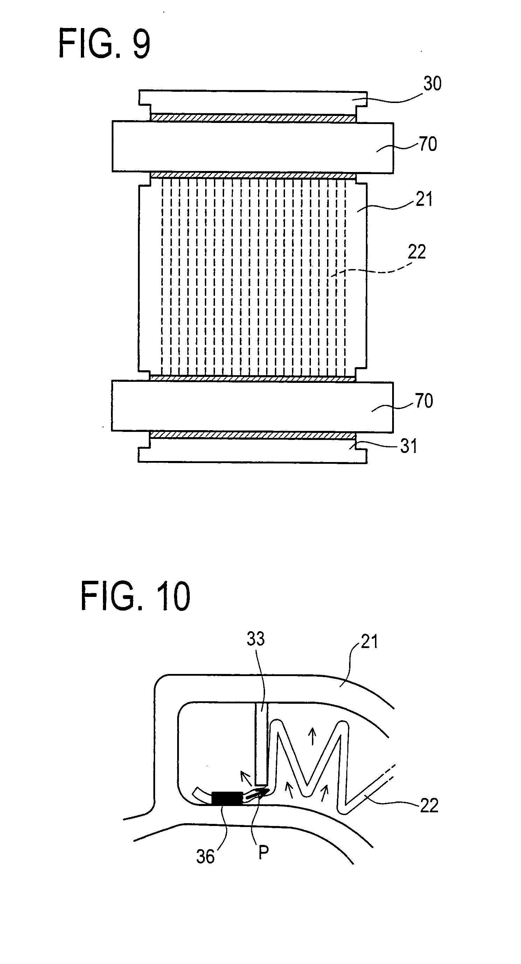

This configuration can change the direction of a force which will act on the weld part of the filter element and the inner wall surface of the container when the fluid flows in the filter element. To be concrete, the force that tends to peel off the weld part can be converted to a tensile force and a shearing force (refer to Fig. 10). Consequently, it is possible to prevent the weld part from coming off from the container and thus improve the life of product.

The above inventions are suitably applied to a filter device of which a container is of a C-shape or 1-shape in cross section.

Further, in the filter device according to the present invention, preferably, the container is constituted of a combination of a plurality of container components including a first container component to which the filter element is joined and a second container component which is joined to the first container component, and the second container component and the filter element are joined to the first container component at the same time.

This configuration allows forming of the container and joining of the filter element to the container to be performed at the same time. The number of processes can be reduced.

Further, in the filter device according to the present invention, preferably, the first container component is a container body and the second container component is a cover joined to the container body, and the cover is welded to the container body and the filter element is fixed by welding to the cover so that an end of the filter element is embedded in the cover.
In the case where the filter element is of a folded form having the plurality of pleats, preferably, an end of the filter element in a direction substantially perpendicular to a folding direction is fixed by welding to the cover so that the end is embedded in the cover.

In this filter device, the end of the filter element is embedded in and fixed to the cover which seals the container housing the filter element. The end corresponds to an end in a direction substantially perpendicular to a folding direction of the filter element in the case where the filter element is of a folded form having a plurality of pleats. The cover is welded to the container. Accordingly, the filter element is firmly fixed to the container. There is no need to fix the filter element to the container through the conventionally used filter frame. The use of such filter frame can be eliminated accordingly. The filter device can be efficient in manufacturing costs and working efficiency.

In the filter device according to the present invention, preferably, the filter is fixed to the cover of which the resin forming the inner surface having been melted, permeating into the end of the cover, and solidified therein.
This is because the melted resin permeates into the filter element and is solidified therein, so that the filter can firmly be fixed to the container.

The "embedded" state in the present invention represents the state where the end of the filter element is inserted in the melted resin, but the melted resin does not permeate into between fibers of the filter element. The "permeating" state represents the state where the end of the filter element is inserted in the melted resin and further the melted resin permeates into between the fibers of the filter element and clings thereto.

Further, a manufacturing method of the above mentioned filter device is characterized by comprising a filter element for filtering out impurities and a container made of resin which houses the filter element, comprising the steps of: melting an inner wall surface of the container to generate a melted resin; allowing the melted resin to permeate into the filter element; and solidifying the melted resin having permeated into the filter element to fix the filter element to the container.

In the manufacturing method of the filter device, the inner wall surface of the container is melted by for example a heated hot plate, generating a melted resin. Then, the generated melted resin is allowed to permeate into the end of the filter. The melted resin permeating into the filter element is solidified and thus the filter is fixed to the container. Consequently, the filter device can be manufactured by fixing the filter element to the container without using the filter frame.

The manufacturing method of the filter device according to the present invention, preferably, further comprises, when the container made of resin which houses the filter element is constructed of a container body and a cover, the steps of: melting the inner surface of the cover to generate the melted resin; melting a portion of the container to be joined to the cover to generate a melted resin; and joining the cover to the container by welding to fix an end of the filter element housed in the container to the inner surface of the cover so that the end is embedded in the melted resin of the inner surface of the cover.

In this manufacturing method of the filter device, the inner surface of the cover is melted by for example a heated hot plate to generate a melted resin. Then, the cover is joined to the container by welding so that the end of the filter element housed in the container is fixed in an embedded state in the melted resin of the inner surface of the cover. Accordingly, the end of the filter element is firmly fixed as embedded in the cover welded to the container. This makes it possible to firmly fix the entire end of the filter element to the container. Consequently, the filter device can be manufactured by fixing the filter element to the container without using the filter frame.

Further, any one of the above filter devices, a fuel reservoir for reserving fuel, and a fuel pump for supplying the fuel to the filter device by sucking the fuel from the fuel reservoir may be assembled into modules to provide a fuel supply system.

### EFFECTS OF THE INVENTION

According to the filter device of the present invention, an end of the filter element is directly fixed by welding to part of the inner wall surface of the container, so that a filter frame is not required.

### BRIEF DESCRIPTION OF DRAWINGS

Fig. 1 is a sectional view showing a schematic configuration of a fuel supply system in a preferred embodiment;
Fig. 2 is a plan view showing a schematic configuration of a fuel filter in a state where a cover is yet to be attached;
Fig. 3 is a longitudinal sectional view of the fuel filter taken along a line A-A of Fig. 2;
Fig. 4 is an explanatory view to explain an outline of a manufacturing process of a fuel filter;
Fig. 5 is an explanatory view to explain an outline of a welding technique for ends of the fuel filter;
Fig. 6 is a view of the filter taken along an arrow A-A of Fig. 5;
Fig. 7 is a sectional view of the filter taken along a line B-B of Fig. 5;
Fig. 8 is a view showing a state where a heating punch is placed in contact with an inner wall of a filter case;
Fig. 9 is an explanatory view to explain an outline of a welding technique for the filter case to an upper and lower covers;
Fig. 10 is an explanatory view to explain a force which will act on a weld part;
Fig. 11 is a view showing a modification of the filter device; and
Fig. 12 is a view showing another modification of the filter device.

### EXPLANATION OF REFERENCE CODES

- 1: Fuel pump
- 6: Fuel filter
- 21: Filter case
- 22: Filter element
- 30: Upper cover
- 31: Lower cover
- 32,33: Rib
- 34: Groove
- 50: Fuel tank
- 70: Hot plate

### BEST MODE FOR CARRYING OUT THE INVENTION

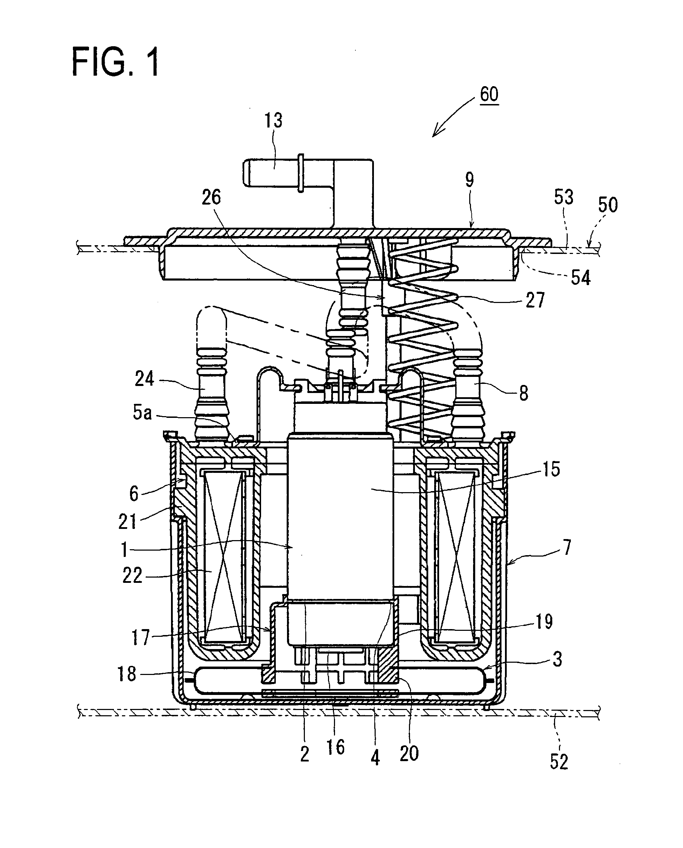

A detailed description of a preferred embodiment of a filter device embodying the present invention will now be given referring to the accompanying drawings. The present embodiment is a fuel supply system using the filter device of the present invention. As shown in Fig. 1, a fuel supply system 60 includes a fuel filter (corresponding to the filter device) 6, a reservoir cup 7, a flange member 9, and others, which are assembled into modules. A fuel tank 50 in which the fuel supply system 60 is to be mounted has a substantially sealed space for storing fuel. The fuel tank 50 has a bottom wall 52 and an upper wall 53 formed with an opening 54. Fig. 1 is a sectional view showing a schematic configuration of the fuel supply system.

The fuel supply system 60 is provided with a fuel pump 1, the fuel filter 6, the reservoir cup 7, and the flange member 9. In the following description, the reservoir cup 7, the flange member 9, the fuel pump 1, and the fuel filter 6 will be explained in this order for convenience of explanation.

First, the reservoir cup 7 is of a substantially cup shape and placed on the bottom wall 52 of the fuel tank 50. The flange member 9 is fixed on the upper wall 53 of the fuel tank 50 to seal the opening 54 of the upper wall 53. The flange member 9 is provided with a fuel discharge pipe 13 providing communication between the outside and the inside of the fuel tank 50. The fuel discharge pipe 13 is connected, outside the tank, to an engine through a fuel supply pipe (not shown).

The fuel pump 1 is an electrically-operated fuel pump, which is housed together with the fuel filter 6 in the reservoir cup 7. The fuel pump 1 includes a pump body 15 formed in substantially columnar shape, a pump part (not shown) incorporated in a lower part of the pump body 15 and an electrically-operated motor part (not shown) incorporated on the pump part in the pump body 15. The pump body 15 has a suction port 16 at a lower end thereof, through which fuel is sucked into the reservoir cup 7, and a discharge port (not shown) at an upper end thereof, through which the fuel is discharged upward.

Mounted on the lower end portion of the pump body 15 is a suction filter 3 surrounding the lower end. This suction filter 3 includes an attachment member 17 made of resin, fit on the lower end portion of the pump body 15, and a bag-like mesh 18 integral with the attachment member 17. The attachment member 17 includes a substantially-cylindrical part 19 and a mesh fixing part 20 continuous from a lower end of the cylindrical part 19. An inner-circumferential protrusion 4 is circumferentially formed on an inner peripheral surface of the cylindrical part 19. An outer-circumferential groove 2 engageable with the inner-circumferential protrusion 4 is circumferentially formed on an outer peripheral surface of the pump body 15.

When the cylindrical part 19 of the attachment member 17 is fit on the lower end portion of the pump body 15 so that the inner-circumferential protrusion 4 is pressed into the outer-circumferential groove 2, the suction filter 3 is attached to the pump body 15. The mesh 18 is formed in a flat bag shape laterally extending with an opening in an upper surface. An edge of this opening is joined to the mesh fixing part 20.

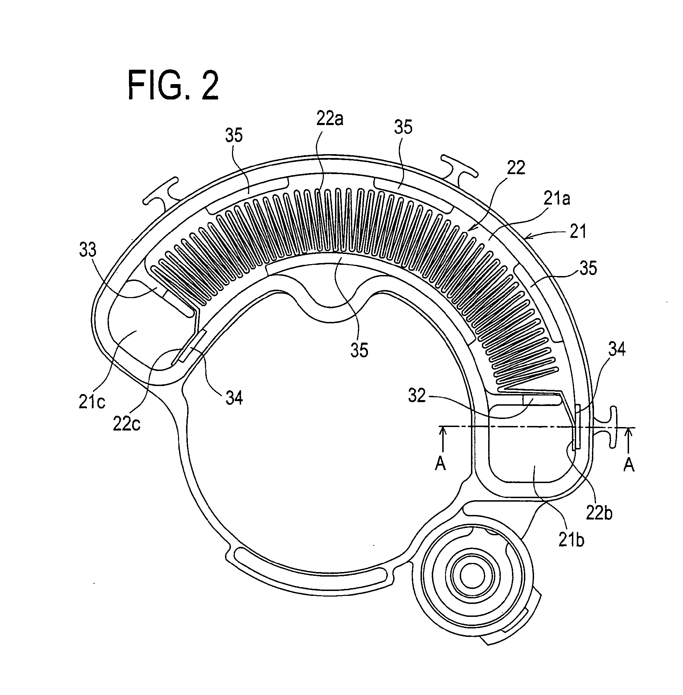

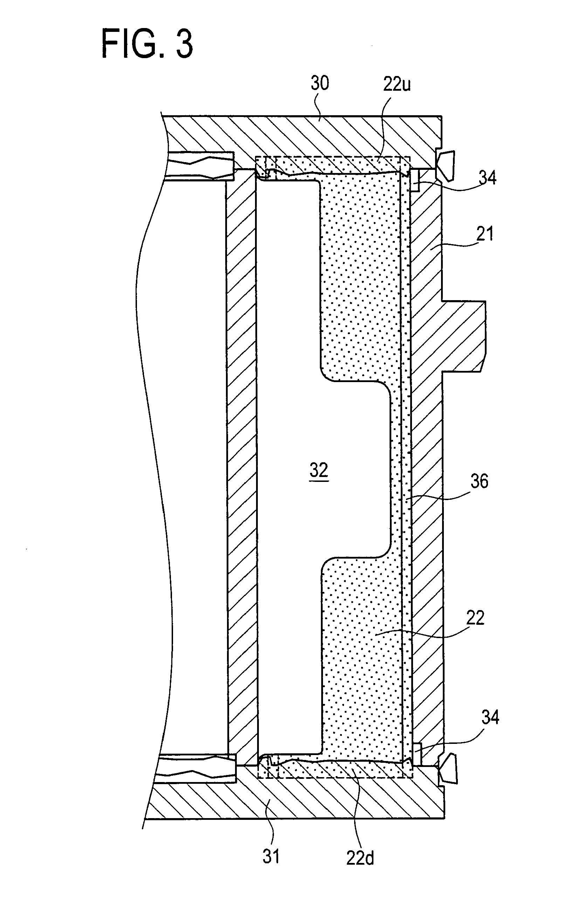

The following explanation will be made on the fuel filter 6 corresponding to the filter device of the present invention, referring to Figs. 2 and 3. Fig. 2 is a plan view showing a schematic configuration of the fuel filter with a cover being yet to be attached thereto. Fig. 3 is a longitudinal sectional view of the fuel filter 6 taken along a line A-A of Fig. 2.

The fuel filter 6 is of a substantially C-shaped (circular) form as shown in Fig. 2 and includes a filter case 21 made of resin and a filter element 22 formed in a folded shape having a plurality of pleats and housed in the filter case 21. As shown in Fig. 3, an upper end and a lower end of the filter case 21 are closed by an upper cover 30 and a lower cover 31 which are made of resin. These upper and lower covers 30 and 31 are joined to the filter case 21 by welding. The materials of the filter case 21, the upper cover 30, and the lower cover 31 are polyacetal (POM).

Both ends 22b and 22c in a circumferential direction (a pleat folding direction) of the filter element 22 are directly fixed to the inner wall surface of the filter case 21 by welding. In particular, the end 22b of the filter element 22 is fixed to the inner wall surface of an outer circumferential side of the filter case 21, while the end 22c of the filter element 22 is fixed to the inner wall surface of an inner circumferential side of the filter case 21.

Further, ends of the filter element 22 in a direction substantially perpendicular to the pleat folding direction, namely, upper and lower ends 22u and 22d are directly welded and fixed to the inner surfaces of the upper and lower covers 30 and 31 as shown in Fig. 3. Specifically, the upper and lower ends 22u and 22d of the filter element 22 are fixed in embedded state to the upper and lower covers 30 and 31.

Weld parts of the ends 22b and 22c of the filter element 22 and the inner wall surface of the filter case 21 are formed in a narrow strip shape extending in a vertical direction. The upper and lower ends 22u and 22d of the filter element 22 are embedded in the upper and lower covers 30 and 31. Accordingly, the ends of the filter element 22 are firmly fixed to and held by the filter case 22. In the fuel filter 6, the filter element 22 can firmly be fixed to the filter case 21 without using a conventionally used filter frame.

The filter case 21 is provided with ribs 32 and 33 for isolating a body (a filtering part) 22a of the filter element 22 from the weld parts of the filter case 21 and the ends 22b and 22c of the filter element 22. These ribs 32 and 33 serve to partition the inside of the filter case 21 into an element housing chamber 21a and element holding chambers 21b and 21c. These ribs 32 and 33 are formed in a protruding shape. The rib 32 is fixed to the inner circumferential side of the filter case 21 and the rib 33 is fixed to the outer circumferential side of the filter case 21.

The above ribs 32 and 33 can serve to change the direction of a force which will act on a weld part 36 of the filter element 22 and the inner wall surface of the filter case 21 when fuel flows into the fuel filter 6. To be more concrete, the force tending to peel off the weld part 36 can be converted to a tensile force and a shearing force (see Fig. 10). Accordingly, it is possible to prevent the weld part 36 from coming off from the filter case 21, resulting in the improved product life.

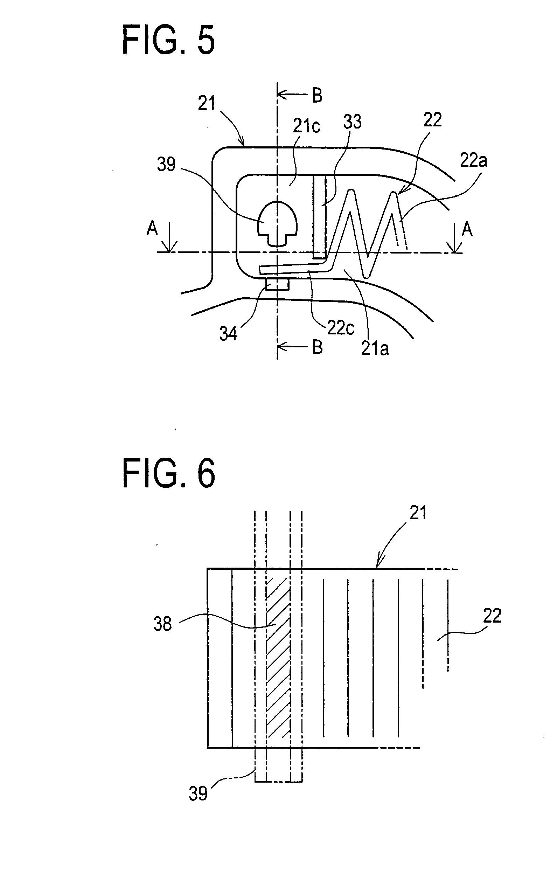

At this time, excess melted resin squeezed out from the weld part 36 will be solidified into flash. When a product is finished with the flash remaining unremoved, the performance of such finished filter device is low. To be concrete, for example, the flash may drop and partially come to be mixed in filtered fuel. Further, there is a possibility that the melted resin sticks to and remains on a heating punch 39 of a long thin rod shape (see Fig. 5) for melting the inner wall surface of the filter case 21. At this moment, the surface of the heating punch 39 has to be cleaned, which will result in decreased production efficiency.

Accordingly, the filter case 21 includes grooves 34 formed in upper and lower ends of each portion to which each of the ends 22b and 22c of the filter element 22 is joined. Thus, the excess melted resin is received in each groove 34 and solidified in sticking state thereto, resulting in solidified resin 37. This solidified resin 37 will not come off from the groove 34, so that part of the solidified resin 37 will not be mixed into the filtered fuel. It is further possible to prevent the resin from sticking to the surface of the heating punch 39 and thus avoid a decrease in production efficiency.

Furthermore, the inner wall of the filter case 21 is formed with a plurality of protrusions 35 for preventing movement of the body 22a of the filter element 22 to reliably provide a fuel passage. The ends 22b and 22c of the filter element 22 are supported by the ribs 32 and 33, so that the fuel passage is reliably provided when fuel flows from the inside to the outside of the filter element 22.

The filter case 21 is further provided with a fuel inlet port and a fuel outlet port not shown. The fuel inlet port is communicated to the discharge port of the fuel pump 1 through a first pipe 8. The fuel outlet port of the filter case 21 is communicated to the fuel discharge pipe 13 of the flange member 9 through a second pipe 24. Each of the pipes 8 and 24 is constituted of a flexible pipe or the like made of metal or resin in bellows shape. The fuel filter 6 is disposed in a high-pressure side with respect to the suction filter 3 and accordingly referred to as a high-pressure filter.

The filter case 21 is fixed to the reservoir cup 7 with a fixing means such as a snap-fitting means as shown in Fig. 1. In addition, a lower surface of the mesh 18 of the suction filter 3 is placed in contact with or close to the bottom surface of the reservoir cup 7. The reservoir cup 7 and the flange member 9 are connected to each other through a connecting mechanism 26 having a well-known height-adjusting function. Between the reservoir cup 7 and the flange member 9, a spring 27 is interposed to resiliently press the reservoir cup 7 against the bottom wall 52 of the fuel tank 50.

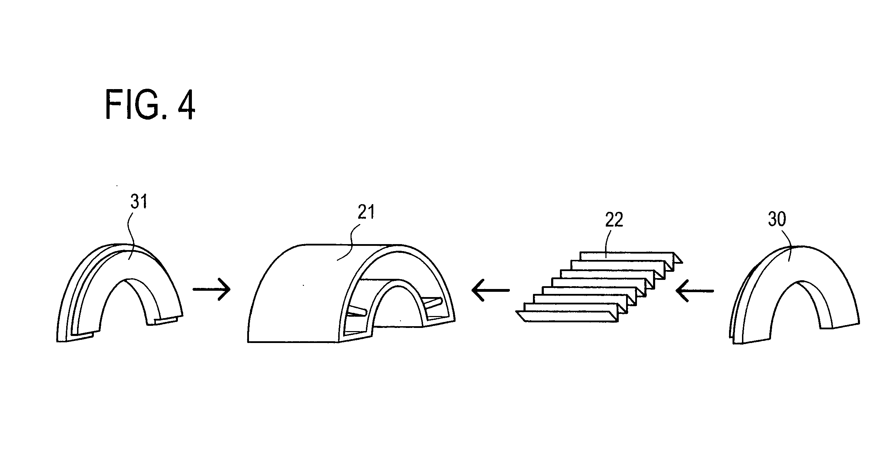

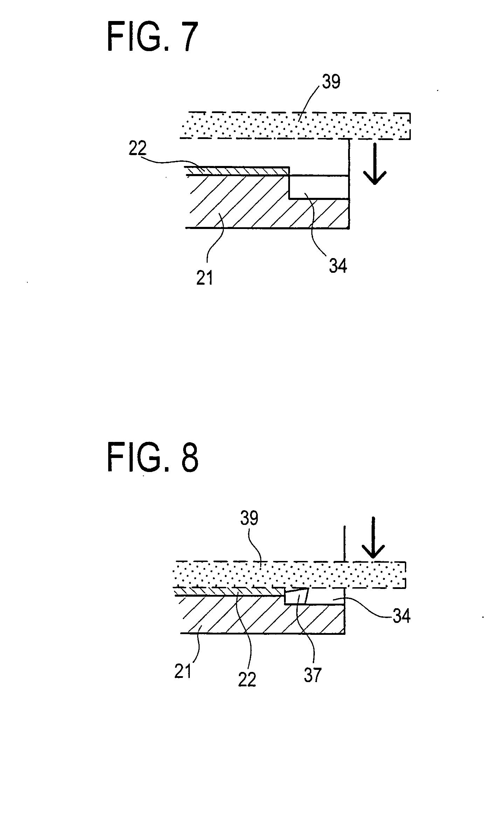

A manufacturing method of the fuel tank 6 is explained below with reference to Figs. 4 to 9. Fig. 4 is an explanatory view to explain an outline of the manufacturing process of the fuel filter. Fig. 5 is an explanatory view to explain an outline of a welding technique for the ends of the fuel filter. Fig. 6 is a view of the filter taken along an arrow A-A of Fig. 5. Fig. 7 is a sectional view of the filter taken along a line B-B of Fig. 5. Fig. 8 is a view showing a state where a heating punch is placed in contact with the inner wall of the filter case. Fig. 9 is an explanatory view to explain an outline of a welding technique for the filter case to the upper and lower covers.

As shown in Fig. 4, first, the filter element 22 is housed in the filter case 21. At this time, the body 22a of the filter element 22 is set in the element housing chamber 21a, while the ends 22b and 22c of the filter element 22 are placed in the element holding chambers 21b and 21c of the filter case 21.

While the ends 22b and 22c of the filter element 22 are put on the inner wall surface of the filter case 21, as shown in Figs. 5 to 7, each contact portion is heated by the rod-shaped heating punch 39 heated to a predetermined temperature. Specifically, as shown in Fig. 8, the heating punch 39 is brought into pressure-contact with the inner wall of the filter case 21, interposing therebetween the ends 22b and 22c of the filter element 22. Thus, a resin portion of the inner wall of the filter case 21 under heat by the heating punch 39 is melted, forming a melted zone 38 (see Fig. 6). In the present embodiment, the heating punch 39 is heated to 180 degrees or more.

Then, the melted resin begins to permeate into the ends 22b and 22c of the filter element 22. After the melted resin sufficiently permeates into the ends 22b and 22c of the filter element 22, the heating punch 39 is separated from the inner wall surface of the filter case 21. The melted resin having permeated into the ends 22b and 22c of the filter element 22 is naturally cooled and solidified. Thus, the ends 22b and 22c of the filter element 22 come to be firmly fixed to the filter case 21.

When the heating punch 39 is put in contact with the inner wall surface of the filter case 21, melting the inner wall surface, excess melted resin is received in the groove 34 formed in the filter case 21. Then, as shown in Fig. 8, the excess melted resin is solidified in the groove 34 as the solidified resin 37. This makes it possible to prevent sticking of the resin to the heating punch 39 and to readily and surely allow welding of the upper and lower covers 30 and 31 to the filter case 21 in the subsequent process.

After the ends 22b and 22c of the filter element 22 are fixed to the filter case 21 by welding, the upper and lower covers 30 and 31 are welded to the filter case 21 which is thus sealed. Specifically, as shown in Fig. 9, the inner surfaces of the upper and lower covers 30 and 31 and the upper and lower ends of the filter case 21 are heated to be melted by hot plates 70. Parts with oblique lines in Fig. 9 correspond to melted portions. After partially melted, the upper and lower covers 30 and 31 are attached to the filter case 21 and then pressurized. The upper end 22u and the lower end 22d of the filter element 22 therefore are embedded in the thus melted resin of the upper and lower covers 30 and 31 as shown in Fig. 3.

The melted resin then comes to permeate into the upper end 22u and the lower end 22d of the filter element 22. After that, the melted resin is naturally cooled and solidified, so that the upper and lower ends 22u and 22d of the filter element 22 are fixed to the upper and lower covers 30 and 31. At this time, the upper and lower covers 30 and 31 are also welded to be joined to the filter case 21. Thus, the filter element 22 is firmly fixed at the ends to the filter case 21 (including the upper and lower covers 30 and 31). In this way, the ends of the filter element 22 are fixed at substantially the same time to the filter case 21 and the upper and lower covers 30 and 31 welded to the filter case 21.

The following explanation is made on the operation of the above mentioned fuel supply system 60. When activated, the fuel pump 1 first sucks the fuel from the reservoir cup 7 through the suction filter 3 and feeds the fuel into the fuel filter 6 through the discharge port (not shown) and the first pipe 8. The fuel is filtered by passing through the fuel filter 6 from the inner circumferential side to the outer circumferential side. The fuel is then supplied to an engine via the second pipe 24, the fuel discharge pipe 13 of the flange member 9, and a fuel supply pipe (not shown).

While the fuel flows through the fuel filter 6, the force acts on the filter element 22. Specifically, the force may act to peel off the weld part 36 of the ends 22b and 22c of the filter element 22 and the filter case 21. However, the filter case 21 of the fuel filter 6 in the present embodiment is provided with the ribs 32 and 33, so that the force acting on the weld part 36 while the fuel flows through the element housing chamber 21a of the fuel filter 6 from the inner circumferential side to the outer circumferential side of the filter case 21 is a resultant force P of a tensile force and a shearing force as shown in Fig. 10. This makes it possible to improve the product life. Fig. 10 is an explanatory view to explain the force acting on the weld part.

Further, the ends of the filter element 22 are firmly fixed to the filter case 21 and also the upper and lower covers 30 and 31 welded to the filter case 21. Accordingly, the fuel having flowed in the fuel filter 6 will not be discharged from the fuel filter 6 unless the fuel is filtered. This fuel filter 6 can remove the use of a filter frame without decreasing the filter performance.

In the fuel filter 6 in the present embodiment as explained in detail above, the ends 22b and 22c of the filter element 22 are fixed to the inner wall surface. The upper and lower ends 22u and 22d of the filter element 22 are fixed to the upper and lower covers 30 and 31 welded to the filter case 21. In the fuel filter 6, as above, the ends of the filter element 22 are firmly fixed to the filter case 21 and the upper and lower covers 30 and 31 welded to the filter case 21. In other words, in the fuel filter 6, the filter element 22 can be fixed to the filter case 21 without the filter frame.

Further, in the fuel filter 6, the filter case 21 is formed with the grooves 34 in the upper and lower ends of each portion of the filter case 21 to which the ends 22b and 22c of the filter element 22 are joined. Thus, excess melted resin is received in the grooves 34 and solidified therein. Consequently, it is possible to surely prevent the occurrence of a defective situation where part of excess melted and solidified resin is mixed in the filtered fuel. It is further possible to prevent sticking of the resin to the heating punch 39, so that the production efficiency could not be decreased.

In the fuel filter 6, the protrusive ribs 32 are provided on the inner wall surface of the inner circumferential side of the filter case 21 and the protrusive ribs 33 are provided on the inner wall surface of the outer circumferential side. When the fuel flows in the fuel filter 6, the force acting on the weld part 36 of the filter element 22 and the inner wall surface of the filter case 21 can be converted from the force tending to peel off the weld part 36 to the tensile force and the shearing force. Accordingly, it is possible to prevent the weld part 36 from dropping off from the filter case 21. The product life can therefore be improved.

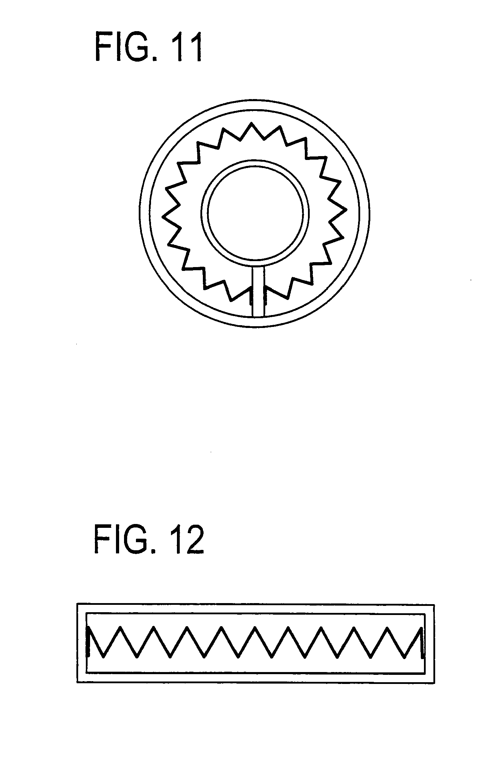

The above mentioned embodiment is merely an example and does not restrict the present invention. It should be understood that the present invention may be embodied in other specific forms without departing from the essential characteristics thereof. For instance, although the substantial C-shaped, semicircular filter device is exemplified in the above embodiment, the present invention may be applied to an almost full-circular filter device as shown in Fig. 11. The present invention may further be applied to an I-shaped filter device as shown in Fig. 12.

In the above embodiment, the filter device according to the present invention is applied to the fuel filter. However, the present invention is not limited thereto and may be applied to any filter device for removing impurities in various kinds of fluid. Although the container of the filter device is constituted of a combination of three container components; the filter case 21, the upper cover 30, and the lower cover 31, it may be constituted of a combination of two or four or more container components.

## Claims

1. A filter device for filtering out impurities, comprising:
a filter element made of resin, for filtering out the impurities; and
a container made of resin, which houses the filter element,
wherein the filter element is joined to the container.

2. The filter device according to claim 1, wherein the filter element is joined to the container by resin welding.

3. The filter device according to claim 2, wherein the welding is hot plate welding.

4. The filter device according to claim 2 or 3, wherein the filter element has an end directly fixed by welding to an inner wall surface of the container.

5. The filter device according to claim 4, wherein the filter element is fixed in a folded form having a plurality of pleats.

6. The filter device according to claim 4 or 5, wherein
the filter element is fixed to the container of which the resin forming the inner wall surface having been melted, permeating into the filter element, and solidified therein.

7. The filter device according to any one of claims 4 to 6, wherein a welded part of the filter element and the inner wall surface is formed in a narrow strip shape.

8. The filter device according to claim 7, wherein the inner wall surface of the container is provided with a groove formed in each end of the weld part in a longitudinal direction so that the melted resin squeezed out from the welded part is received in the groove.

9. The filter device according to claim 7 or 8 further comprising a protrusive rib formed on the inner wall surface of the container to isolate the welded part of the filter element and the inner wall surface from a filtering part of the filter element.

10. The filter device according to any one of claims 1 to 9, wherein the container is of a C-shape or I-shape in cross section.

11. The filter device according to any one of claims 1 to 10, wherein
the container is constituted of a combination of a plurality of container components including a first container component to which the filter element is joined and a second container component which is joined to the first container component, and
the second container component and the filter element are joined to the first container component at the same time.

12. The filter device according to claim 11, wherein the first container component is a container body and the second container component is a cover joined to the container body, and
the cover is welded to the container body and the filter element is fixed by welding to the cover so that an end of the filter element is embedded in the cover.

13. The filter device according to claim 12, wherein
when the filter element is of a folded form having the plurality of pleats, an end of the filter element in a direction substantially perpendicular to a folding direction is fixed by welding to the cover so that the end is embedded in the cover.

14. The filter device according to claim 12 or 13, wherein
the filter is fixed to the cover of which the resin forming the inner surface having been melted, permeating into the end of the cover, and solidified therein.

15. A manufacturing method of a filter device comprising a filter element for filtering out impurities and a container made of resin which houses the filter element, comprising the steps of:
melting an inner wall surface of the container to generate a melted resin;
allowing the melted resin to permeate into the filter element; and
solidifying the melted resin having permeated into the filter element to fix the filter element to the container.

16. The manufacturing method of a filter device according to claim 15, further comprising, when the container made of resin which houses the filter element is constructed of a container body and a cover, the steps of:
melting the inner surface of the cover to generate the melted resin;
melting a portion of the container to be joined to the cover to generate a melted resin; and
joining the cover to the container by welding to fix an end of the filter element housed in the container to the inner surface of the cover so that the end is embedded in the melted resin of the inner surface of the cover.

17. A fuel supply system comprising:
a filter device configured according to any one of claims 1 to 14;
a fuel reservoir for reserving fuel; and
a fuel pump for supplying the fuel to the filter device by sucking the fuel from the fuel reservoir,
which are assembled in modules.
